Europäisches Patentamt

European Patent Office

Office européen des brevets

(19)

(11) **EP 0 947 274 B1**

(12) **EUROPEAN PATENT SPECIFICATION**

(45) Date of publication and mention
of the grant of the patent:
**08.09.2004  Bulletin 2004/37**

(51) Int Cl.⁷: **B23D 55/10**

(21) Application number: **98110235.3**

(22) Date of filing: **04.06.1998**

(54) **Bandsaw having a blade tensioning device and a vibration absorber**

Bandsäge mit Bandsägeblattspannvorrichtung und Schwingungsdämpfer

Scie à bande avec dispositif pour tensionner la lame de scie et amortisseur de vibrations

(84) Designated Contracting States:
**DE FR IT**

(30) Priority: **06.03.1998  JP 7124598**

(43) Date of publication of application:
**06.10.1999  Bulletin 1999/40**

(73) Proprietor: **FORESTRY AND FOREST PRODUCTS
RESEARCH INSTITUTE
Inashiki-Gun, Ibaragi-Ken 305-8687 (JP)**

(72) Inventor: **Fujiwara, Katsutoshi
Inashiki-Gun, Ibaragi-Ken, 305-8687 (JP)**

(74) Representative: **Viering, Jentschura & Partner
Postfach 22 14 43
80504 München (DE)**

(56) References cited:
WO-A-97/25551       US-A- 532 663
US-A- 879 500       US-A- 2 017 419
US-A- 3 810 409

**Description**

BACKGROUND OF THE INVENTION

Field of the Invention

This invention relates to a bandsaw machine according to the preamble of claim 1.

Description of the Related Art

In known bandsaw machines, an endless bandsaw is tensely mounted on a pair of saw wheels disposed in vertically distant positions to be driven by a force frictionally transmitted thereto from the rotated wheels. Such a bandsaw machine includes a tension mechanism for maintaining the bandsaw in a tensile condition to ensure a straight saw-cut line by the bandsaw, particularly.

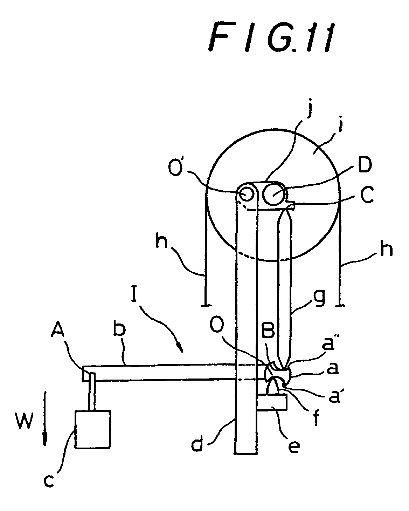

A typical known bandsaw machine using a tension mechanism is schematically shown in Fig. 11. A balance lever b fixed to a central position of a support rod a can rotate integrally with the support rod a, and a balance weight c is hung from the point of force A at the distal end of the lever b. The support rod a has formed inverse U-shaped cavities a' opening downwardly at opposite ends thereof. Knife-shaped edges f project upwardly from support members e fixed to pillars d, and upper ends of the knife-shaped edges f engage the cavities a'. The support rod a also has formed a U-shaped cavity a" opening upwardly. A push rod g is provided with its lower end engaging in the cavity a".

A member j having one end pivotally supported at the upper end of the pillar d has the opposite end concentrically connected to the center D of an upper (follower) wheel i. The other end of the push rod g engages with a lower end of the member j at position C.

Thus, there is made a lever mechanism I having the point of support O where the knife-shaped edge f engages the cavity a', the point of force A where the weight W of the balance weight c is applied as a basic biasing force, and the point of action B where the push rod g engages the cavity a". As a result, the push rod g acts on the member j at point C to bias the upper wheel j apart from the lower wheel (not shown) and to apply a tensile force to the bandsaw h mounted on and around the upper and lower wheels.

In the conventional machine, however, when the balance lever swings vertically upon expansion or contraction of the bandsaw due to fluctuations in tensile force thereof, the swinging motion of the lever is transferred to the balance weight ane makes it vibrate up and down. Vibration of the balance weight and consequent changes in its weight then return back to the bandsaw via the balance lever, and again cause fluctuations in tensile force of the bandsaw. Therefore, the bandsaw cannot maintain its predetermined constant tensile condition, fails to run stably and straight, and degrades the dimensional accuracy of a work and straightness of the saw-cut line. That is, the balance weight used to apply a tensile force to the bandsaw to stretch it tensely rather results in impairing the tensile condition of the bandsaw during operation in a vicious cycle. US 3,810,409 discloses a bandsaw machine of the initially-mentioned type.

OBJECTS AND SUMMARY OF THE INVENTION

It is therefore an object of the invention to provide a bandsaw machine of the initially-mentioned type in which the bandsaw is reliably held in an appropriately tensile condition.

According to the invention, there is provided a bandsaw machine comprising the features of claim 1.

Further embodiments are described in the dependent claims.

BRIEF DESCRIPTION OF THE DRAWINGS

Fig. 1 is a fragmentary side elevational view of a bandsaw machine having a bandsaw tension mechanism including a vibration absorber according to an embodiment of the invention;

Fig. 2 is a side elevational view of the vibration absorber shown in Fig. 1;

Fig. 3 is a schematic diagram of a vibrational system model of the vibration absorber shown in Fig. 2;

Figs. 4A and 4B are diagrams showing a conventional machine and the embodiment of the invention under an experiment;

Fig. 5 is a graph showing results of the experiment shown in Figs. 4A and 4B of a bandsaw machine C specified in Table 2 using a tension mechanism of the specification $A_1$ (embodiment of the invention) in Table 1;

Fig. 6 is a graph showing results of the experiment shown in Figs. 4A and 4B of a bandsaw machine D specified in Table 2 using a tension mechanism of the specification $B_1$ (prior art) in Table 1;

Fig. 7 is a diagram showing damping curves of the conventional machine and the embodiment of the invention which are obtained from values in graphs of Figs. 5 and 6;

Fig. 8 is a graph showing results of the experiment shown in Figs. 4A and 4B of a bandsaw machine D specified in Table 2 using a tension mechanism of the specification $A_2$ (wheels held stationary);

Fig. 9 is a graph showing results of the experiment shown in Figs. 4A and 4B of a bandsaw machine D specified in Table 2 using a tension mechanism of the specification $A_2$ (embodiment of the invention) in Table 1 (wheels rotated at 500 rpm);

Fig. 10 is a graph showing results of the experiment shown in Figs. 4A and 4B of a bandsaw machine D specified in Table 2 using a tension mechanism of the specification $A_2$ (prior art) in Table 1 (wheels rotated at 500 rpm); and

Fig. 11 is a diagram showing a conventional machine.

DETAILED DESCRIPTION OF THE PREFERRED EMBODIMENTS

Explained below are embodiments of the invention with reference to the drawings.

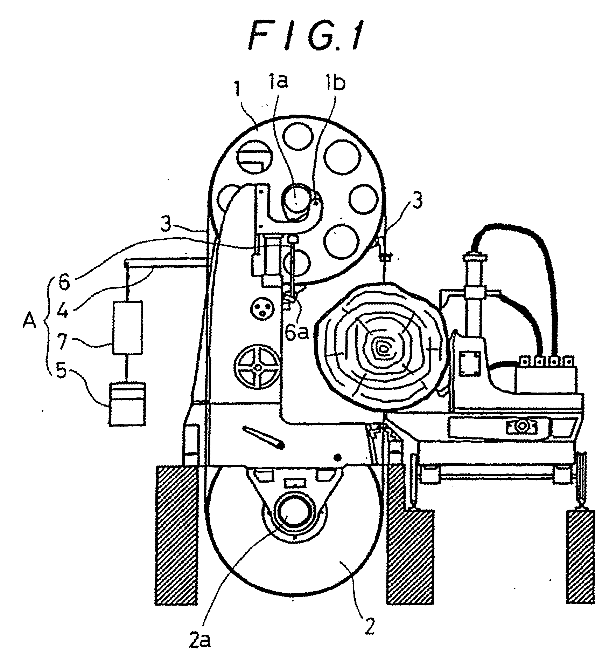

Fig. 1 is a fragmentary side elevational view of a bandsaw machine equipped with a bandsaw tension mechanism including a vibration absorber, taken as the first embodiment of the invention.

Reference numeral 1 denotes an upper wheel rotatably supported by a movable shaft 1a, and 2 denotes a lower wheel supported by a stationary shaft 2a. A bandsaw 3 is mounted to span on and around these wheels 1 and 2. Numeral 4 denotes a balance lever pivotally supported at a point of support (not shown). A balance weight 5 is hung from one end (left end in the drawing) of the balance lever 4, and the other end of the balance lever 4 engages with the lower end of a push rod 6 via a support member 6a and others.

The upper end of the push rod 6 engages with a bearing of a movable shaft 1a to urge the upper wheel 1 to rotate about its pivot axle 1b in a direction opposite from the lower wheel 2. Numeral 7 denotes a vibration absorber interposed in the path connecting one end of the balance lever 4 and the balance weight 5 to reduce vertical vibration of the balance weight caused by an acceleration due to a swinging vertical motion of the balance lever 4 responsive to expansion and contraction of the bandsaw 3. The balance lever 4, balance weight 5, push rod 6 and vibration absorber 7 form the bandsaw tension mechanism A.

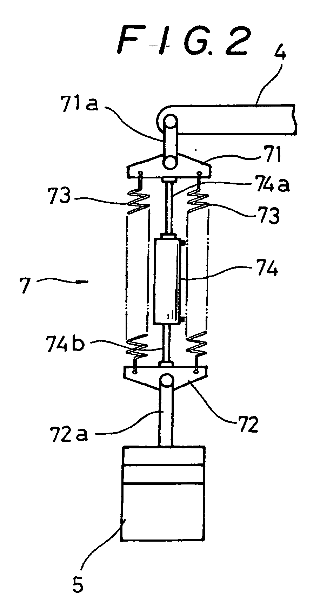

Fig. 2 is a side elevational view of an embodiment of the vibration absorber 7. As shown in Fig. 2, the vibration absorber 7 includes upper and lower support members 71, 72, a pair of coil springs 73 used as elastically biasing means, dashpot 74, and a pair of upper and lower support rods 71a, 72a. Opposite ends of the support rod 71a connecting the upper end of the upper support member 71 and one end of the balance lever 4 are supported pivotally. Pivotally supported at the lower end of the lower support member 72 is the upper end of the support rod 72a supporting the balance weight 5.

The pair of coil springs 73, 73 extend in parallel from the upper support member 71 to the lower support member 72. The dashpot 74 extends between and in parallel with the coil springs. A rod 74a is fixed to the upper support member 71 and to a case of the dashpot 74, and another rod 74b is fixed to the lower support member 72.

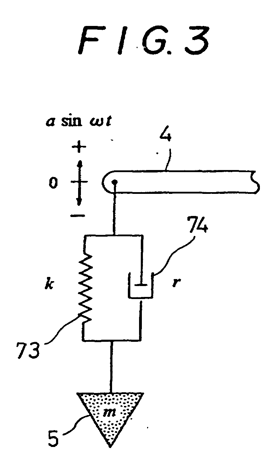

Fig. 3 is a diagram of a vibrational system model of the vibration absorber 7 shown in Fig. 2 in which a: amplitude (balance lever 4), $\omega$: angular frequency (balance lever 4), t: time, k: spring constant (coil springs 73), and r: damping viscous constant (dashpot 74).

In the vibration system shown here, according to the vibration insulation theory of a linear vibrational system of one degree of freedom, when the bandsaw tension lever 4 vibrates at $a\sin \omega t$, transfer of vibration from the bandsaw tension lever 4 to the balance weight 5 will be substantially prevented under the following condition.

$$\omega/\omega_n \gg 1 \tag{1}$$

where $\omega$: angular frequency of the balance lever 4 (rad/s), and $\omega_n$: natural angular frequency of the balance weight 5 (rad/s).

On the other hand, in a linear vibrational system, the natural angular frequency $\omega_n$ of the balance weight 5 is expressed as:

$$(\omega_n)^2 = k/m = kg/w \tag{2}$$

where k: spring constant of the coil springs 73 (kgf/cm), m: mass of the balance weight 5 ($kgfs^2/cm$), g: gravity acceleration ($cm/s^2$), and w: bandsaw tensile load (kgf).

From Equations (1) and (2),

$$(2\pi f)^2 >> kg/w \tag{3}$$

where f: natural frequency of the balance lever 4 (Hz).

It is apparent from Equation (3) that, by maximizing the value of the left side and minimizing the value of the right side, the vibration absorbing effect of the vibration absorber 7 is improved, and transfer of vibration from the balance lever 54 to the balance weight 5 is minimized.

Next, by connecting left and right sides of Equation (3) with the sign of equality and by introducing a coefficient M, the next equation is obtained.

$$(2\pi f)^2 = M^2 \; kg/w \tag{4}$$

In Equation (4), if the value of M is increased, then the vibration absorbing effect of the vibration absorber 7 is improved.

To realize it, it would be ideal to increase the natural frequency f of the balance lever 4, decrease the spring constant k of the coil springs 73, and increase the weight w of the balance weight 5. Actually, however, restrictions in its mechanical design do not allow large changes in natural frequency f of the bandsaw tension lever 4.

Restrictions also exist in determining the value of weight w of the balance weight 5. That is, the value of w depends on the cross-sectional area and the tension magnification of the bandsaw actually used, and the tension magnification is determined by a known equation, depending upon sizes and other factors of the push rod 6, balance lever, etc., and a value calculated for the mechanical design, which can be regarded as a constant. Therefore, it is impossible to change the value of the weight w alone freely.

These situations result in permitting a free choice only for the spring constant k in Equation 4.

Note here that the following equation is valid for the spring constant k.

$$k = Gd^4/8nD^3 \tag{5}$$

where k: spring constant (kgf/cm), G: shearing modulus coefficient (kgf/cm$^2$), d: diameter of the wire (cm), n: number of turns of the coil, and D: diameter of the wire (cm).

Based on the background discussed above, the Inventor made a comparative experiment of a bandsaw machine according to the invention and a conventional machine, using coil springs which are different in spring constant and in other factors.

Table 1 shows specifications of bandsaw tension mechanisms in bandsaw machines used in the experiment. As shown in Table 1, the experiment was executed on two machines according to the invention with different specifications and two conventional machines with different specifications. In Table 1, $B_1$ and $B_2$ are conventional machines, and $A_1$ and $A_2$ are machines embodying the invention.

TABLE 1

| Tension Mechanism | $B_1$ | $A_1$ | $B_2$ | $A_2$ |
|---|---|---|---|---|
| Weight of balance weight (kgf) | 21.3 | 19.8 | 20.4 | 17.8 |
| Load transformer (kgf) | 0 | 0 | 3.4 | 3.4 |
| Vibration absorber (kgf) | 0 | 1.5 | 0 | 2.6 |
| Total weight of balance weight (kgf) | 21.3 | 21.3 | 23.8 | 23.8 |
| Spec. of vibration absorber | | | | |
| Number of coil springs (pc) | | 2 | | 2 |
| Number of turns of coil spring n | | 79 | | 180 |
| Diameter of coil D(cm) | | 2.2 | | 2.2 |
| Diameter of wired(cm) | | 0.3 | | 0.3 |
| Spring constant k (two in parallel) (kgf/cm) | | 3.00 | | 1.33 |
| Shearing modulus coefficient of coil G(kgf/cm) | | $10.1 \times 10^5$ | | $10.1 \times 10^5$ |
| Number of dashpots | | 1 | | 1 |
| Air flow adjusting valve of dashpot | | fully open | | fully open |

Taking the height of the bandsaw tension lever 4 of the bandsaw machine and other factors into account, two kinds of coil springs used here were different only in number of turns and equal in coil diameter and other properties. Spring constants were obtained by the experiment whereas shearing modulus coefficients G were calculated from Equation (5).

Bandsaws, balance levers 4, and others, used in the experiment had two different kinds of properties, C and D, as shown in Table 2.

TABLE 2

| Bandsaw Machine | C | D |
|---|---|---|
| Diameter of wheel (mm) | 913 | 913 |
| Length of tension lever (mm) | 683 | 846 |
| Natural frequency of lever (Hz) | 3.00 | 2.38 |
| Tensile Load (kgf) | 21.3 | 23.8 |
| Thickness of bandsaw (mm) | 0.90 | 0.90 |
| Width of bandsaw (mm) | 93.0 | 93.0 |
| Length of free part (linear part) of bandsaw (mm) | 166.0 | 166.0 |
| Revolution of wheel (rpm) | 0 (static) | 0 (static) or 500 |

The experiment was started with measuring displacement of each balance lever manually vibrated vertically, changes in weight and oscillation acceleration of each balance weight, changes in tensile force of each bandsaw, etc. in both static and rotated (with no load) conditions of the bandsaw.

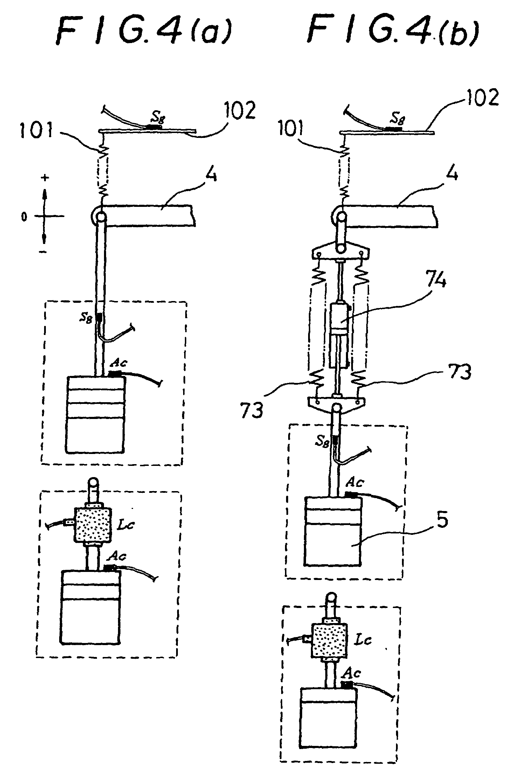

Fig. 4A shows the experimental specification of a conventional machine, and Fig. 4B shows that of a machine embodying the invention.

In Figs. 4A and 4B, Sg is a strain gauge, Ac is an acceleration transformer, Lc is a load transformer, 73 is a coil spring, and 74 is a dashpot. Numerals 101 and 102 are a helical spring and a thin metal leaf spring used as auxiliary tools in the experiment.

Upon measuring displacement of the balance lever 4, one end of the metal leaf spring 102 attached with the strain gauge Sg was connected to one end of the balance lever 4 by the helical spring 101 which is flexible enough to permit free vibration of the balance lever 4, and the balance lever 4 was set to extend in a horizontal direction, gently stretching the helical spring 101. In this status, by vertically vibrating the balance lever 4, causing the helical spring 101 to expand or contract, displacement of the balance lever 4 caused by a strain produced in the metal leaf spring 102 was measured and recorded, expressing the horizontal state by 0, upper displacement by + and lower displacement by -.

For observing the vibrating aspect of the balance weight, the load transformer Lc, acceleration transformer Ac and strain gauge Sg, and so forth, were set as illustrated.

For measuring the force of action applied to the bandsaw, the strain gauge was attached on the center in the width direction of the bandsaw 3, and the bandsaw 3 was held stationary, positioning the strain gauge Sg in a central point of its free part (straight-extending part) 3.

Results of the experiment and behaviors of the embodiment of the invention are explained below.

Fig. 5 is a graph showing results of the experiment with the bandsaw machine C in Table 2 having the tension mechanism $A_1$ (embodiment of the invention) specified in Table 1. In Fig. 5, 51 is the curve of changes in bandsaw tensile force, 52 is the curve of changes in oscillation acceleration of the balance weight, and 53 is the curve of changes in displacement of the balance lever. The ordinate shows the magnitude of changes or displacement, and the abscissa shows time (in seconds).

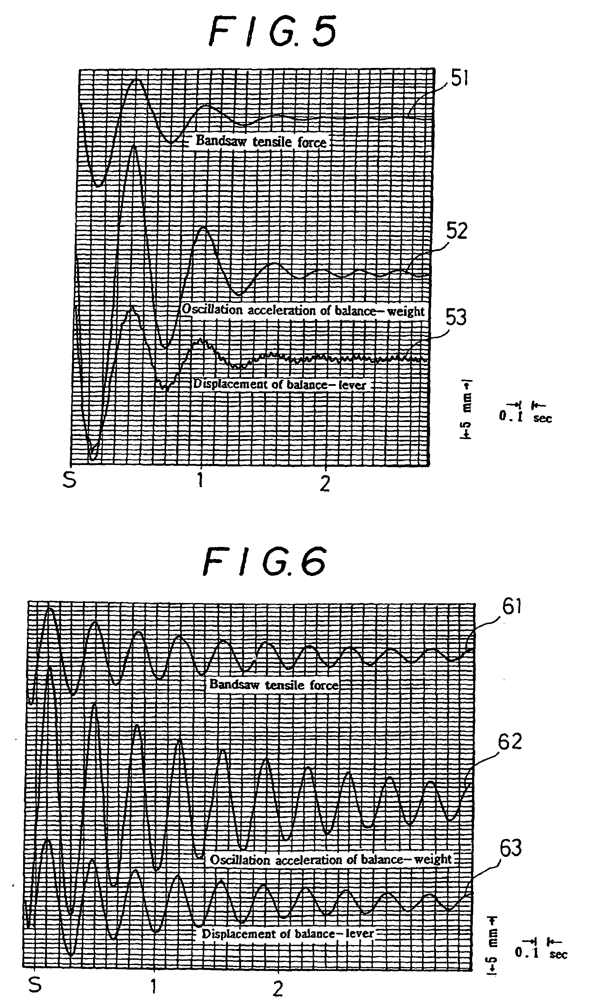

Fig. 6 is a graph showing results of the same experiment with the bandsaw machine C in Table 2 having the tension mechanism $B_1$ (conventional machine) specified in Table 1. In Fig. 6, 61 is the curve of changes in bandsaw tensile force, 62 is the curve of changes in oscillation acceleration of the balance weight, and 63 is the curve of changes in displacement of the balance lever. The ordinate shows the magnitude of changes or displacement, and the abscissa shows time (in seconds).

Comparing Fig. 5 (embodiment of the invention) and Fig. 6 (conventional machine), it is known that, in the embodiment of the invention, vibration of the balance weight derived from vibration of the balance lever is suddenly damped one second after the start (S) and substantially converged in two seconds and that the bandsaw tensile force is quickly stabilized accordingly.

In contrast, in Fig. 6 (conventional machine), fluctuations of the balance weight caused by vibration of the bandsaw tension lever continue even after two seconds from the start (S), and the bandsaw tensile force still fluctuates accordingly.

Average vibration damping ratios Am were calculated from oscillation waveforms of the balance weight measured in the embodiment of the invention (Fig. 5) and in the conventional machine (Fig. 6), respectively. It resulted in Am=1.22 in the conventional machine and Am=2.24 in the embodiment of the invention.

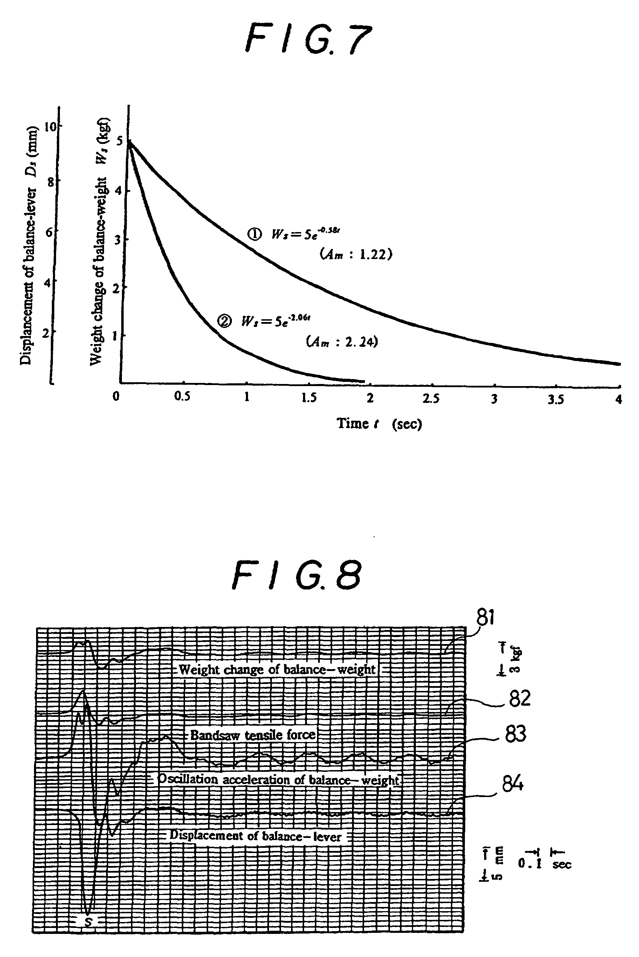

Fig. 7 is a diagram showing damping curves of the conventional machine and the embodiment of the invention made by using these numerical values. In this case, the initial displacement of the balance lever set to 9.4 mm (initial displacement of the balance weight Ws being 5.0 kgf) was applied, and vibration damping was started thereafter.

In Fig. 7, (1) is the Ws curve of the conventional machine, and (2) is the Ws curve of the embodiment of the invention. After the initial displacement of the balance lever, in one second from the start of the damping, the conventional machine exhibited Ws=2.79 kgf (about 1/1.8 of the initial displacement), and the embodiment of the invention exhibited Ws=o.64 kgf (about 1/7.8 of the initial displacement). Two seconds later, Ws was nearly zero in the embodiment of the invention.

As reviewed above, in the bandsaw tension mechanism A according to the invention, fluctuations of the balance weight caused by vibration of the balance lever are quickly suppressed by the vibration absorber 7, and the bandsaw tensile force is also stabilized quickly.

In other words, the vibration absorber 7 behaves to isolate the balance weight from vibration of the balance lever to prevent the phenomenon that the bandsaw tensile force varies due to vibration which would be otherwise transferred from the balance weight via the balance lever to the bandsaw.

On the other hand, since the motion of the balance lever flexibly follows changes in bandsaw tensile force, the vibration absorber 7 does not disturb the intended behaviors of the balance lever, as apparent from Figs. 5 and 6.

Fig. 8 is a graph showing results of the experiment of the bandsaw machine D (bandsaw being stationary) of Table 2 having the tension mechanism $A_2$ (embodiment of the invention) specified in Table 1.

In Fig. 8, 81 is the curve of changes in weight of the balance weight, 82 is the curve of changes in bandsaw tensile force, 83 is the curve of changes in oscillation acceleration of the balance weight, and 84 is the curve of changes in displacement of the balance lever. The ordinate shows the magnitude of changes or displacement, and the abscissa shows time (in seconds).

In the machine shown here, the vibration damping effect is more remarkable than that shown in Fig. 5. Namely, within one second from the start point (S) where vibration is intentionally applied to the bandsaw held stationary, vibration of the balance lever stops, and fluctuations in the bandsaw tensile force substantially disappear. This fact means that coil springs having a larger number of turns, i.e., a smaller spring constant, contribute more to the vibration damping effect of the vibration absorber 7.

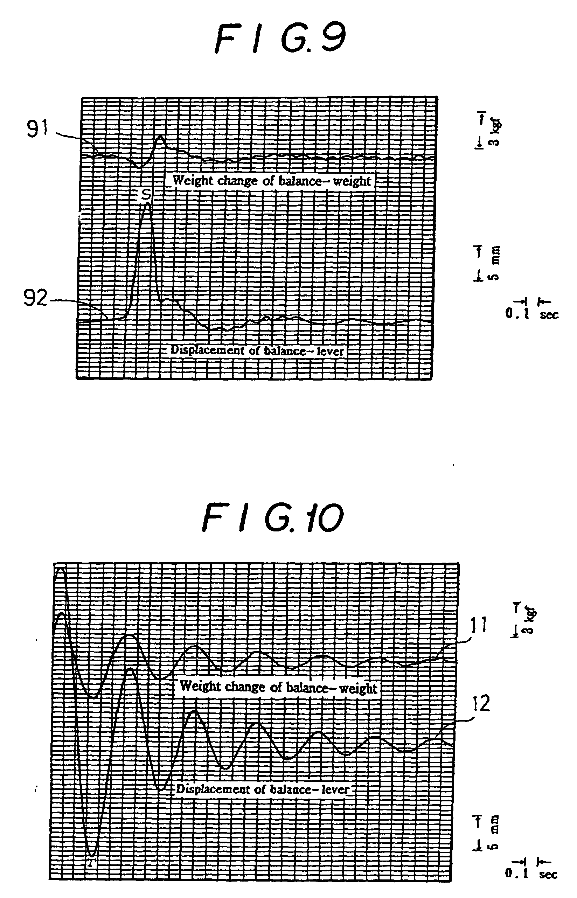

Fig. 9 is a graph showing results of the experiment of the bandsaw machine D (revolution of the wheel: 500 rpm) of Table 2 having the tension mechanism $A_2$ (embodiment of the invention) specified in Table 1.

In Fig. 9, 91 is the curve of changes in weight of the balance weight, 92 is the curve of changes in displacement of the balance lever. The ordinate shows the magnitude of changes or displacement, and the abscissa shows time (in seconds).

Fig. 10 is a graph showing results of the experiment of the bandsaw machine D (revolution of the wheel: 500 rpm) of Table 2 having the tension mechanism $B_2$ (conventional machine) specified in Table 1.

In Fig. 10, 11 is the curve of changes in weight of the balance weight, and 12 is the curve of changes in displacement of the balance lever. The ordinate shows the magnitude of changes or displacement, and the abscissa shows time (in seconds).

In Fig. 9 (embodiment of the invention), at the point of time (S) where the balance lever is intentionally vibrated, displacement of the balance lever is 16.3 mm, and the fluctuation in weight of the balance weight calculated from the oscillation acceleration of the balance lever is 1.74 kgf.

On the other hand, in Fig. 10 (conventional machine), at the point of time (T) where the balance lever is intentionally vibrated, displacement of the balance lever is -16.3 mm, and the fluctuation in weight of the balance weight calculated from the oscillation acceleration of the balance lever is 3.09 kgf.

Although values of displacement of the balance lever are equal in absolute value in both the embodiment of the invention and the conventional, the fluctuation of the balance weight in Fig. 9 (embodiment of the invention) is much smaller than that in the conventional machine (Fig. 10). This means that, as explained before with reference to Figs. 5 and 6, the vibration absorber 7 is remarkably effective in minimizing transfer of vibration from the balance lever to the balance weight and in preventing fluctuations in bandsaw tensile force due to transfer of vibration of the balance weight to the bandsaw via the balance lever.

This is evident also from Fig. 9 in which, although the balance lever vibrates once or twice in response to vibration of the balance lever, the vibration is quickly damped and converged.

As explained above, according to the invention, the bandsaw machine comprises lower and upper wheels supported by a stationary shaft and a movable shaft, respectively, a bandsaw mounted on and around the wheels to run therearound, and a bandsaw tension mechanism for normally stretching the bandsaw, and the bandsaw tension mechanism includes a lever, a weight hung from one end of the lever, a push rod having a lower end connected to the other end of the lever and an upper end engaging the movable shaft, and a vibration absorber interposed between the weight and one end of the lever. Therefore, even when vibration occurs in the balance lever in response to expansion and contraction of the bandsaw due to fluctuations in bandsaw tensile force while the bandsaw runs and operates, the vibration absorber effectively damps the vibration and effectively prevents it from being transferred to the balance weight.

As a result, the invention can remove the undesirable phenomenon that vibration of the balance lever causes vibration of the balance weight, again returns back to the balance lever and then to the bandsaw, and changes the tensile force of the bandsaw. Thus, the balance weight flexibly follows changes in tensile force of the bandsaw to move independently from vertical movements of the balance lever and to maintain its constant weight, and contributes to prevention of vibration or unreliable travel of the bandsaw, degradation of the accuracy of the saw-cut line on a work, zig-zag saw-cut line on a work, etc.

**Claims**

1.  A bandsaw machine comprising:

    a lower wheel (2) supported by a stationary shaft (2a) and an upper wheel (1) supported by a movable shaft (1a);
    a bandsaw (3) mounted on and around said wheels (1,2) to run therearound; and
    a bandsaw tension mechanism for normally stretching said bandsaw, said bandsaw tension mechanism including a lever (4), a weight (5) hung from one end of said lever (4), a push rod (6) having a lower end connected to the other end of said lever (4) and an upper end engaging said movable shaft (1a), and a vibration absorber (7) interposed between said weight (5) and said one end of said lever (4), **characterized in that**

    said vibration absorber (7) includes an upper support member (71) pivotally suspended from said one end of said lever, a lower support member (72) suspending said weight, two coil springs (73,73) extending in parallel from the said upper support member (71) to said lower support member (72) and being connected thereto, and a dashpot (74) disposed in parallel with and between said two coil springs (73,73) and extending from said upper support member (71) to said lower support member (72) and being connected thereto.

2.  The bandsaw machine according to claim 1 **characterized in that** the wheel diameter is 913mm, the length of the lever (4) is 683mm, the natural frequency of the lever (4) is 3Hz, the tension load of the bandsaw (3) is 21,3x9,80665N (21,3kgf), the thickness of the bandsaw (3) is 0,9mm, the width of the bandsaw (3) is 93mm, the weight (5) has a weight of 19,8x9,80665N (19,8kgf), the vibration absorber (7) has a weight of 1,5x9,80665N (1,5kgf), the number of turns of the respective coil spring is 79, the coil diameter is 22mm, the wire diameter of the respective coil spring (73,73) is 3mm, and the coil spring constant of the two parallel coil springs (73,73) is 0,3x9,80665N/mm (3 kgf/cm).

3.  The bandsaw machine according to claim 1 **characterized in that** the wheel diameter is 913mm, the length of the lever (4) is 846mm, the natural frequency of the lever (4) is 2,38Hz, the tension load of the bandsaw (3) is 23,8x9,80665N (23,9kgf), the thickness of the bandsaw (3) is 0,9mm, the width of the bandsaw (3) is 93mm, the weight (5) has a weight of 17,8x9,80665N (17,8kgf), the vibration absorber (7) has a weight of 2,6x9,80665N (2,6kgf), the number of turns of the respective coil spring is 180, the coil diameter is 22mm, the wire diameter of the respective coil spring (73,73) is 3mm, and the coil spring constant of the two parallel coil springs (73,73) is 0,133x9,80665N/mm (1,33kgf/cm).

**Patentansprüche**

1.  Bandsägemaschine, aufweisend:

    ein unteres Rad (2), das mittels einer stationären Welle (2a) abgestützt ist, und ein oberes Rad (1), das mittels einer bewegbaren Welle (1a) abgestützt ist,
    ein Sägeband (3), das so an und um die Räder (1, 2) herum montiert ist, dass es dort herum verläuft, und
    einen Sägeband-Spannmechanismus zum lotrechten Spannen des Sägebands, wobei der Sägeband-Spannmechanismus aufweist:

einen Hebel (4), ein Gewicht (5), das am einen Ende des Hebels (4) hängt, eine Schubstange (6) mit einem unteren Ende, das mit dem anderen Ende des Hebels (4) gekuppelt ist, und einem oberen Ende, das mit der bewegbaren Welle (1a) in Eingriff ist, und einen Schwingungsdämpfer (7), der zwischen dem Gewicht (5) und dem einen Ende des Hebels (4) angeordnet ist, **dadurch gekennzeichnet,**

**dass** der Schwingungsdämpfer (7) aufweist: ein oberes Stützteil (71), das schwenkbar am einen Ende des Hebels aufgehängt ist, ein unteres Stützteil (72), an dem das Gewicht hängt, zwei Schraubenfedern (73, 73), die sich parallel vom oberen Stützteil (71) zum unteren Stützteil (72) erstrecken und damit gekuppelt sind, und einen Dämpfungszylinder (74), der parallel zu und zwischen den beiden Schraubenfedern (73, 73) angeordnet ist und der sich vom oberen Stützteil (71) zum unteren Stützteil (72) erstreckt und damit gekuppelt ist.

2. Bandsägemaschine gemäß Anspruch 1, **dadurch gekennzeichnet, dass** der Raddurchmesser 913 mm ist, die Länge des Hebels (4) 683 mm ist, die Eigenfrequenz des Hebels (4) 3 Hz ist, die Zugbelastung des Sägebands (3) 21,3 x 9,80665 N (21,3 kgf) ist, die Dicke des Sägebands (3) 0,9 mm ist, die Breite des Sägebands (3) 93 mm ist, das Gewicht (5) eine Gewichtskraft von 19,8 x 9,80665 N (19,8 kgf) hat, der Schwingungsdämpfer (7) eine Gewichtskraft von 1,5 x 9,80665 N (1,5 kgf) hat, die Windungsanzahl der jeweiligen Schraubenfeder 79 ist, der Windungsdurchmesser 22 mm ist, der Drahtdurchmesser der jeweiligen Schraubenfeder (73, 73) 3 mm ist und die Schraubenfederkonstante der beiden parallelen Schraubenfedern (73, 73) 0,3 x 9.80665 N/mm (3 kgf/cm) ist.

3. Bandsägemaschine gemäß Anspruch 1, **dadurch gekennzeichnet, dass** der Raddurchmesser 913 mm ist, die Länge des Hebels (4) 846 mm ist, die Eigenfrequenz des Hebels (4) 2,38 Hz ist, die Zugbelastung des Sägebands (3) 23,8 x 9,80665 N (23,9 kgf) ist, die Dicke des Sägebands (3) 0,9 mm ist, die Breite des Sägebands (3) 93 mm ist, das Gewicht (5) eine Gewichtskraft von 17,8 x 9,80665 N (17,8 kgf) hat, der Schwingungsdämpfer (7) eine Gewichtskraft von 2,6 x 9,80665 N (2,6 kgf) hat, die Windungsanzahl der jeweiligen Schraubenfeder 180 ist, der Windungsdurchmesser 22 mm ist, der Drahtdurchmesser der jeweiligen Schraubenfeder (73, 73) 3 mm ist und die Schraubenfederkonstante der beiden parallelen Schraubenfedern (73, 73) 0,133 x 9,80665 N/mm (1,33 kgf/cm) ist.

**Revendications**

1. Scie à ruban comprenant :

une roue inférieure (2) supportée par une tige fixe (2a) et une roue supérieure (1) supportée par une tige mobile (1a) ;
une lame de scie à ruban (3) montée sur et autour desdites roues (1, 2) pour la faire tourner, et
un mécanisme de tension de lame de scie à ruban pour étirer normalement ladite lame de scie à ruban, ledit mécanisme de tension de lame de scie à ruban comprenant un levier (4), un poids (5) suspendu à l'une des extrémités dudit levier (4), une tige-poussoir (6) ayant une extrémité inférieure reliée à l'autre extrémité dudit levier (4) et une extrémité supérieure s'enclenchant dans ladite tige mobile (1a), et un amortisseur de vibrations (7) placé entre ledit poids (5) et une desdites extrémités dudit levier (4), **caractérisé en ce que** ledit amortisseur de vibrations (7) comprend une barre de support supérieure (71) suspendue en pivot depuis l'une desdites extrémités dudit levier, une barre de support inférieure (72) permettant de suspendre ledit poids, deux ressorts à boudin (73, 73) s'étendant parallèlement de ladite barre de support supérieure (71) à ladite barre de support inférieure (72) et reliés entre elles, et un tube d'amortissement (74) placé parallèlement et entre lesdits deux ressorts à boudin (73, 73) et s'étendant de ladite barre de support supérieure (71) à ladite barre de support inférieure (72) et relié à ces dernières.

2. Scie à ruban selon la revendication 1 **caractérisée en ce que** le diamètre de la roue est de 913 mm, la longueur du levier (4) est de 683 mm, la fréquence propre du levier (4) est de 3 Hz, la contrainte de traction de la lame de scie à ruban (3) est de 21,3 x 9,80665 N (21,3 kgf), l'épaisseur de la lame de scie à ruban (3) est de 0,9 mm, la largeur de la lame de scie à ruban (3) est de 93 mm, le poids (5) présente une masse de 19,8 x 9,80665N (19,8 kgf), l'amortisseur de vibrations (7) présente une masse de 1,5 x 9,80665N (1,5 kgf), le nombre de tours du ressort à boudin respectif est de 79, le diamètre du boudin est de 22 mm, le diamètre du fil du ressort à boudin respectif (73, 73) est de 3 mm et la constante de ressort des deux ressorts à boudin en parallèle (73, 73) est de 0,3 x 9,80665N (3 kgf/cm).

3. Scie à ruban selon la revendication 1 **caractérisée en ce que** le diamètre de la roue est de 913 mm, la longueur du levier (4) est de 846 mm, la fréquence propre du levier (4) est de 2,38 Hz, la contrainte de traction de la lame de scie à ruban (3) est de 23,8 x 9,80665 N (23,9 kgf), l'épaisseur de la lame de scie à ruban (3) est de 0,9 mm, la largeur de la lame de scie à ruban (3) est de 93 mm, le poids (5) présente une masse de 17,8 x 9,80665N (17,8 kgf), l'amortisseur de vibrations (7) présente une masse de 2,6 x 9,80665N (2,6 kgf), le nombre de tours du ressort à boudin respectif est de 180, le diamètre du boudin est de 22 mm, le diamètre du fil du ressort à boudin respectif (73, 73) est de 3 mm et la constante de ressort des deux ressorts à boudin en parallèle (73, 73) est de 0,133 x 9,80665N (1,333 kgf/cm).

# F I G.1

FIG.2

# F I G. 3

# F I G. 4 (a)  F I G. 4 (b)

# F I G. 5

51
Bandsaw tensile force

52
Oscillation acceleration of balance—weight

53
Displacement of balance—lever

$\updownarrow$5 mm$\updownarrow$

0.1 sec

S  1  2

# F I G.6

61
Bandsaw tensile force

62
Oscillation acceleration of balance—weight

63
Displacement of balance—lever

$\updownarrow$5 mm$\updownarrow$

0.1 sec

S  1  2

# F I G. 7

① $W_s = 5e^{-0.58t}$
($A_m$ : 1.22)

② $W_s = 5e^{-2.06t}$
($A_m$ : 2.24)

# F I G. 8

81

Weight change of balance—weight

3 kgf

82

83

Bandsaw tensile force

Oscillation acceleration of balance—weight

84

Displacement of balance—lever

5 mm   0.1 sec

S

EP 0 947 274 B1

## F I G.9

91
92

Weight change of balance-weight

S

Displacement of balance-lever

3 kgf
5 mm
0.1 sec

## F I G.10

11
12

Weight change of balance-weight

Displacement of balance-lever

3 kgf
5 mm
0.1 sec

# F I G.11